Europäisches Patentamt

European Patent Office

Office européen des brevets

(19)

(11) Veröffentlichungsnummer: **0 119 477**
**A1**

(12) # EUROPÄISCHE PATENTANMELDUNG

(21) Anmeldenummer: 84101615.7

(22) Anmeldetag: 16.02.84

(51) Int. Cl.³: **G 01 P 5/07**

(30) Priorität: 23.02.83 DE 3306343

(43) Veröffentlichungstag der Anmeldung: 26.09.84
Patentblatt 84/39

(84) Benannte Vertragsstaaten: **AT BE CH DE FR GB IT LI NL SE**

(71) Anmelder: **Flasch, Dieter, Baumweg 7, D-8034 Germering (DE)**
Anmelder: **Suchy, Manfred, Brombergerweg 5, D-8037 Olching (DE)**

(72) Erfinder: **Flasch, Dieter, Baumweg 7, D-8034 Germering (DE)**
Erfinder: **Suchy, Manfred, Brombergerweg 5, D-8037 Olching (DE)**

(74) Vertreter: **Liesegang, Roland, Dr.-Ing., Sckellstrasse 1, D-8000 München 80 (DE)**

(54) Geschwindigkeitsmesser für strömende Medien.

(57) Ein Geschwindigkeitsmesser für strömende Medien, der insbesondere zur Anwendung an Surfbrettern gedacht ist, weist ein Laufrad (12) auf, das vollständig versenkt in einem Gehäuse (1) untergebracht und von der Strömung über eine Einlaßöffnung (8) im Gehäuse (1) beaufschlagt wird. Das Laufrad (12) ist als Schnelläufer ausgebildet, und alle seine Schaufeln (20) sind über die Einlaßöffnung (8) im Gehäuse (1) gleichzeitig beaufschlagt, wodurch die dem Strömungsmedium innewohnende Energie optimal zur Umsetzung in Drehenergie des Laufrades (12) genutzt wird.

EP 0 119 477 A1

0119477

**Dr.-Ing. Roland Liesegang**

Patentanwalt
European Patent Attorney

Sckellstrasse 1
D-8000 München 80
Telefon (089) 4 48 24 96

Telex 5214 382 pali d
Telekopierer (089) 27 20 4 80, 27 20 4 81
Telegramme patemus münchen

Postscheck München 394 18-802
Hypobank München 6 400 194 333
Reuschelbank München 2 603 007

DIETER FLASCH

Germering, Bundesrepublik Deutschland

und

MANFRED SUCHY

Olching, Bundesrepublik Deutschland

EU 037 11

Geschwindigkeitsmesser für strömende Medien
---

Die Erfindung betrifft einen Geschwindigkeitsmesser für strömende Medien, insbesondere zur Anwendung an Wasserfahrzeugen, mit einem Laufrad, das vollständig versenkt in einem Gehäuse untergebracht und von der Strömung über eine Einlaßöffnung im Gehäuse beaufschlagt ist und dessen Bewegung zu einer Verarbeitungsvorrichtung mit nachgeschalteter Anzeigevorrichtung übermittelt wird.

Es ist ein Geschwindigkeitsmesser dieser Art bekannt, bei dem aufgrund der vollständig im Gehäuse versenkten Laufradanordnung Beschädigungen oder gar Zerstörungen ausgeschlossen und außerdem Verschmutzungsgefahr vermindert sind (EP Nr. 83 103 922.7). Bei dem bekannten Geschwindigkeitsmesser wird nur ein Teil der Schaufeln des Laufrades über eine Nut im Gehäuse von der Strömung beaufschlagt. Die in der Strömung enthaltene Energie wird also nicht optimal zur Umsetzung in Drehenergie des Laufrades ausgenutzt. Dies ist insbesondere bei einer Ausgestaltung der Verarbeitungsvorrichtung nachteilig, bei der die Laufraddrehung unter Ausnutzung des bekannten "Wiegand"-Effektes in Spannungsimpulse umgewandelt werden. Um eine Anzeige zu erzeugen, muß eine bestimmte Anzahl von Laufradumdrehungen zurückgelegt werden. Da die Drehzahl des Laufrades bei dem bekannten Geschwindigkeitsmesser aufgrund der oben erwähnten nur teilweisen Beaufschlagung des Laufrades nach Art eines Wasserrades vergleichsweise gering ist, dauert es verhältnismäßig lange, bis die zum Produzieren einer Anzeige erforderliche Anzahl von Laufradumdrehungen erreicht ist.

Der Erfindung liegt die Aufgabe zugrunde, einen Geschwindigkeitsmesser der eingangs beschriebenen Art so auszubilden, daß eine bessere Ausnutzung der Strömungsenergie des Mediums zur Umsetzung in Drehenergie des Laufrades und damit eine höhere Laufraddrehzahl erreicht wird.

Zur Lösung dieser Aufgabe ist bei einem Geschwindigkeitsmesser der eingangs genannten Art vorgesehen, daß das Laufrad als Schnelläufer ausgebildet und alle seine Schaufeln über die Einlaßöffnung im Gehäuse gleichzeitig beaufschlagt werden.

Im einfachsten Falle läßt sich das Laufrad im Querschitt eines rohrförmigen Strömungskanals mit der Achse in Strömungsrichtung angeordnet vorstellen. Hierbei werden alle Schaufeln gleichzeitig von der ankommenden Strömung beaufschlagt. Diese einfachste Anordnung ist jedoch nicht günstig hinsichtlich des Platzbedarfes. In dieser Hinsicht zweckmäßiger ist eine Anordnung gemäß einer Weiterbildung der Erfindung, wobei das Laufrad mit zur Anströmrichtung geneigter, insbesondere etwa senkrechter Achsenlage im Gehäuse angeordnet ist und wobei die Einlaßöffnung auf der Einlaßseite des Laufrades und eine Auslaßöffnung des Gehäuses axial versetzt zur Einlaßöffnung auf der Auslaßseite des Laufrades angeordnet sind.

- 3 -

bei dieser Anordnung liegen die Einlaßöffnung, das Laufrad und die Auslaßöfnung versetzt zueinander undparallel. Diese Anordnung erlaubt es, das Laufrad parallel zum Boden eines Surfbrettes oder dgl. mit senkrechter Achsenlage dazu anzuordnen, was die lichte, über den Boden vorstehende Höhedes Gehäuses klein zu halten erlaubt.

Zweckmäßig ist das Laufrad als Axialrad, d.h. als Schnellstläufer, ausgebildet, und die im Umfangsrichtung aufeinanderfolgenden Schaufeln decken den gesamten Strömungsquerschnitt ab, lassen also bei Betrachtung des Laufrades in Draufsicht keine Zwischenräume zwischen in Umfangsrichtung aufeinanderfolgenden Schaufeln frei. Andererseits ist eine Anordnung der Schaufeln bevorzugt,bei welcher sich die Schaufeln in Umfangsrichtung einander nicht oder nur unwesentlich überlappen.

Die Fertigung ist vereinfacht, wenn die Schaufeln gemäß einer weiteren Ausgestaltung der Erfindung nur einfach gekrümmt sind, mit anderen Worten auf Schraubenlinien verlaufen bzw. in der Abwicklung in geneigten Ebenen liegen. Dies vereinfacht die Fertigung erheblich im Vergleich zu den bei Strömungsmaschinen üblichen doppelt, d.h. räumlich gekrümmten Schaufelgestaltungen.

Der Anstellwinkel bzw. der Steigungswinkel der Schaufeln des Laufrades kann je nach den Anwendungsbedingungen variabel sein. Dabei ist hauptsächlich daran gedacht, Schaufelräder mit unterschiedlichen, an dem einzelnen Laufrad jedoch unverstellbaren Anstellwinkeln vorrätig zu haben, wobei das Laufrad mit dem jeweils passenden Anstellwinkel für den betreffenden Anwendungsfall ausgewählt werden kann. Selbstverständlich besteht auch die Möglichkeit, Laufräder mit verstellbaren Anstellwinkeln der Schaufeln mit den üblichen Verstelleinrichtungen zu verwenden, wenngleich dies wegen des hohen Aufwandes

0119477

- 4 -

im vorliegenden Fall nicht bevorzugt ist.

Zur Erhöhung der Anströmgeschwindigkeit des Laufrades ist bevorzugt, wenn die Einlaßöffnung des Gehäuses eine düsenartige Verengung aufweist, die in einen Ringraum auf der Einlaßseite des Laufrades mündet, und wenn auf der Auslaßseite des Laufrades ebenfalls ein Ringraum vorgesehen ist, von dem die Auslaßöffnung um 180° am Umfang des Laufrades zur Einlaßöffnung versetzt ausgeht.

Die Umsetzung der Laufraddrehung in eine Anzeige erfolgt zweckmäßig wie bekannt (EP 83 103 922.7), wobei der Kern des Laufrades von einem Magnet durchsetzt ist, der mit einem benachbart dem Laufrad im Gehäuse untergebrachten Magnetfeldsensor zusammenwirkt, welcher durch die Laufraddrehung erzeugte magnetische Impulse in Spannungsimpulse umformt und an eine elektrische Schaltung zum Betätigen der Anzeigevorrichtung weiterleitet.

Um Leitungsdrähte und damit Bohrungen im Boden des Surfbrettes oder dgl. zwischen dem Gehäuse und der Anzeigevorrichtung zu vermeiden, ist zweckmäßig, wenn die vom Magnetfeldsensor erzeugten Spannungsimpulse drahtlos zur Anzeigevorrichtung übertragen werden (EP 83 103 922.7).

In Weiterbildung der Erfindung und des in EP 83 103 922.7 Beschriebenen umfaßt die Verarbeitungsvorrichtung vorteilhaft einen Mikrocomputer, in welchem von der Bewegung des Laufrades abgeleitete Größen wie die Momentan-Geschwindigkeit , die Durchschnitts- und die Maximalgeschwindigkeiten , der zurückgelegte Weg und die Beschleunigung innerhalb einer vorgegebenen Zeitspanne ermittelt und der Anzeigevorrichtung zugeführt werden, z.B. nach Wahl des Benutzers nacheinander.

Die Anzeige ist hierbei also sehr vielseitig, wobei die jeweilige Anzeigegröße vom Benutzer beispielsweise durch Knopfdruck abrufbar ist.

Die Erfindung ist im folgenden anhand schematischer Zeichnungen an einem Ausführungsbeispiel mit weiteren Einzelheiten näher erläutert. Es zeigen:

Fig. 1 eine Unteransicht eines Geschwindigkeitsmesser nach der Erfindung;

Fig. 2 einen Längsschnitt durch den Geschwindigkeitsmesser nach Fig. 1 nach der Linie II-II in Fig. 1;

Fig. 3 und 4 eine Draufsicht und eine Seitenansicht des in dem Geschwindigkeitsmesser nach den Fig. 1 und 2 verwendeten Laufrades in etwas größerem Maßstab;

Fig. 5 ein Prinzpschaltbild einer Verarbeitungsvorrichtung für mit dem Geschwindigkeitsmesser nach den Fig. 1 und 2 erzeugte Spannungsimpulsen und

Fig. 6 ein Beispiel für eine ausgeführte Schaltung

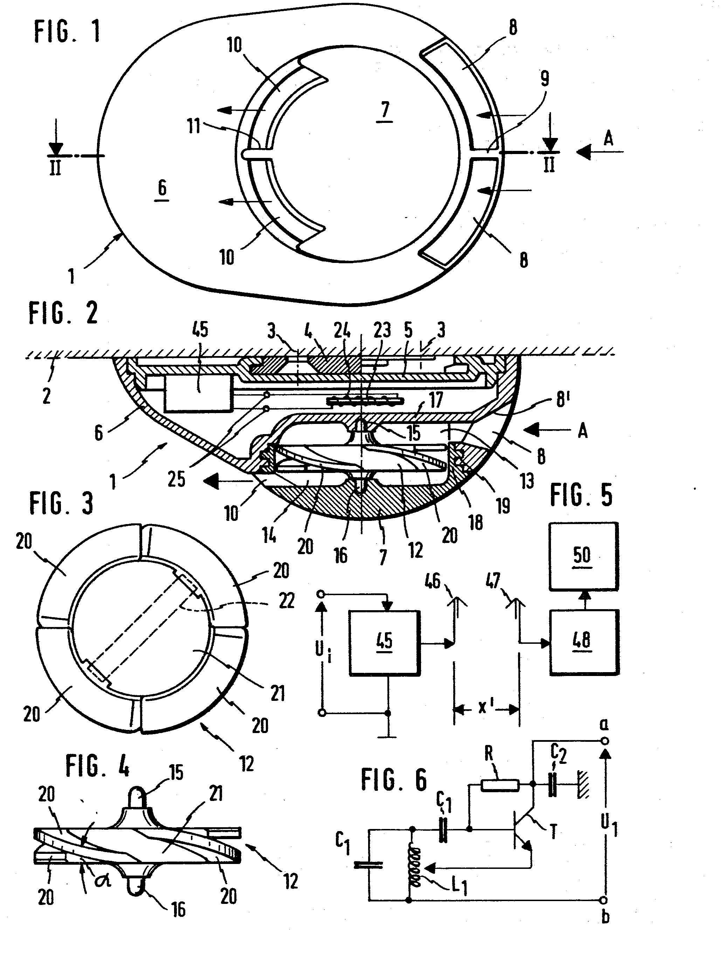

In den Figuren 1 und 2 ist insgesamt mit dem Bezugzeichen 1 ein mehrteiliges Gehäuse bezeichnet, das gemäß Fig. 2 eine am Boden 2 eines Surfbrettes oder eines Segelbootes mittels Schrauben 3 zu befestigende Montageplatte 4 eine Grundplatte 5, ein Gehäuseunterteil 6 und einen Gehäusedeckel 7 umfaßt.

Das Gehäuse hat auf der Anströmseite symmetrisch zur Längsachse und zur Hauptanströmrichtung A angeordnete Eintrittsöffnungen 8,8 beidseitig einer in Fig. 2 nicht geschnitten dargestellten Mittelrippe 9. In der Höhe versetzt, d.h. im Gehäusedeckel 7, hat das Gehäuse parallel zu den Einalßöffnungen 8 verlaufende Auslaßöffnungen 10,10 die ebenfalls beidseitig einer in Fig. 2 nicht geschnitten

dargestellten Mittelrippe 11 symmetrisch zur Längsmittelachse und zur Anströmrichtung A liegen.

Gemäß Fig. 2 ist ein insgesamt mit dem Bezugszeichen 12 bezeichnetes Laufrad "liegend",d.h. mit Achsenlage senkrecht zum Boden 2 des Surfbrettes oder dgl. angeordnet. Auf der Einlaßseite und der Auslaßseite des Laufrades 12 sind hier je ein Ringraum 13,14 gebildet. In den Ringraum 13 münden die Einlaßöffnungen 8,8 über eine düsenartige Verengung 8', welche die Strömung beschleunigt.In den Ringraum 14 münden in Umfangsrichtung 180° und in axialer Richtung um die Laufradbreite versetzt die Auslaßöffnungen 10,10.Das Laufrad 12 ist über angeformte Lagerzapfen 15, 16 in einer den Ringraum 13 begrenzenden Zwischenwand 17 des Gehäuseunterteils 6 bzw. im Gehäusedeckel 7 gelagert. Zweckmäßig ist das Laufrad 12 mit diesen Lagerzapfen 15,16 aus einem Kunststoff, wie Delrin, hergestellt.

Der in Draufsicht (Fig. 1) rund ausgebildete Gehäusedeckel 7 hat einen die Laufradbreite aufnehmenden zylindrischen Abschnitt 18, mit dem er mit dem Gehäuseunterteil 6 über eine Bajonettverbindung 19 verbunden ist. Der Innendurchmesser dieses zylindrischen Abschnittes 18 ist nur geringfügig größer als der Außendurchmesser des Laufrades, so daß die Abmessungen des Spaltes zwischen dem Laufrad 12 und dem zylindrischen Abschnitt 18 sehr klein in der Größenordnung von wenigen 1/100 mm, bei einem ausgeführten Beispiel von 4/100 mm ist. Dies bewirkt, daß praktisch das gesamte anströmende Medium die Schaufeln 20 des Laufrades beaufschlagt und nicht ungenutzt an diesen vorbeiströmt.

Die Gestaltung des Laufrades selbst ist den Fig. 3 und 4 zu entnehmen. Bei dem gezeigten Ausführungsbeispiel sind insgesamt vier Schaufeln 20 vorgesehen, die in Draufsichtgesehen den freibleibenden Strömungsquerschnitt zwischen dem Ringraum 13 und dem Ringraum 14 abdecken, sich jedoch praktisch nicht überlappen. Der Anstellwinkel $\alpha$ der Schaufeln 20 beträgt gegenüber der Radialebene in-dem gezeigten Beispiel ca. 6°,kann jedoch je nach Bedarf und Anwendungsfall auch größer oder kleiner gewählt sein. Die Schaufeln 20 sind um den zylindrischen Kern 21 des Laufrades 12 schraubenlinienförmig, d.h. einfach gekrümmt, angeordnet. In der Abwicklung liegen die Schaufeln in Ebenen, die eine Steigung von 6° gegenüber einer Radialebene haben.

Gemäß Fig. 3 wird der Kern 21 des Laufrades von einem zylindrischen Stabmagneten 22 durchsetzt. Dieser Stabmagnet wirkt nach Art des bekannten "Wiegand"-Effektes mit einem von einer Spule 24 umwickelten Draht 23 zusammen.Der Draht 23 besteht aus einer ferromagnetischen Legierung und ist so behandelt, daß er eine innere magnetisch weiche Zone und äußere magnetisch harte Zone besitzt. Diese beiden Zonen verhalten sich unter dem Einfluß eines magnetischen Feldes je nach dessen Stärke gleich oder unterschiedlich. Der Draht 23 mit Spule 24 ist ortsfest im Gehäuseunterteil untergebracht und über Ausgangsklemmen 25 mit einer elektrischen Oszillatorschaltung 45 zur drahtlosen Übermittlung der vom Draht 24 gelieferten Spannungsimpulse verbunden. In Fig. 5 ist ein Ausführungsbeispiel einer Verarbeitungsvorrichtung mit nachgeschalteter Anzeigevorrichtung gezeigt. Bei der Verarbeitungsvorrichtung nach Fig. 5 wird der Energieinhalt der Spannungsimpulse $U_i$ dadurch ausgenutzt, daß diese Spannung als Stromversorgung für die Oszillatorschaltung 45 benutzt wird, welche bei 46 ggf. frequenzgewandelte Impulssignale abstrahlt. Diese Impulssignale werden bei 47 an einer Empfangsvorrichtung 48 empfangen und dem Anzeigemechanismus 50 zugeführt.

- 8 -

Die Oszillatorschaltung 45 könnte auch durch eine Fremdspannung versorgt werden, welche beispielsweise von einer Batterie geliefert wird. Dann dient die von dem Magnetfeldsensor erzeugte Impulsspannung als Steuersignal für die Oszillatorschaltung 45 derart, daß ein verstärkter Impuls bei 46 abgestrahlt und bei 47 empfangen wird. Dies erlaubt die Vergrößerung des Abstandes x gemäß Fig. 3 zwischen dem Sendeort und dem Empfangsort von einem begrenzten Wert in der Größenordnung von 50 cm je nach Auslegung auf ein Vielfaches des Wertes x.

Mit der Empfangsvorrichtung 48 integriert kann ein Mikrocomputer sein, in welchem von der Bewegung des Laufrades abgeleitete Größen wie die Momentangeschwindigkeit, die Durchschnitts-und die Maximalgeschwindigkeiten, der zurückgelegte Weg und die Beschleunigung innerhalb einer vorgegebenen Zeitspanne ermittelt und der Anzeigevorrichtung zugeführt werden.

Fig. 6 zeigt eine ausgeführte Oszillatorschaltung 45, wie sie in Fig. 5 nur durch einen Kasten angedeutet ist.

Eine zwischen den Punkten a und b angelegte Versorgungs-spannung $U_i$ wird von einem Magnetfeldsensor gemäß Fig. 2 bereitgestellt und regt einen Schwingkreis mit einem Kondensator $C_1$ und einer Schwingspule $L_1$ zu Schwingungen an.

Ein Transistor T verstärkt die entstehende Schwingung der Schwingspule $L_1$, wobei ein Widerstand R die erforderliche Transistorspannung erzeugt. Ferner ist ein Kondensator $C_2$ zum Filtern höherfrequenter Anteile der Schwingkreisspannung in Richtung auf die Versorgungsspannung $U_i$ vorgesehen.

0119477

**Dr.-Ing. Roland Liesegang**

Patentanwalt
European Patent Attorney

Sckellstrasse 1
D-8000 München 80
Telefon (089) 4 48 24 96

Telex 5214382 pali d
Telekopierer (089) 272 04 80, 272 04 81
Telegramme patemus münchen

Postscheck München 394 18-802
Hypobank München 6 400 194 333
Reuschelbank München 2 603 007

– 9 –

Patentansprüche

1. Geschwindigkeitsmesser für strömende Medien, insbesondere zur Anwendung an Wasserfahrzeugen, mit einem Laufrad, das vollständig versenkt in einem Gehäuse untergebracht und von der Strömung über eine Einlaßöffnung im Gehäuse beaufschlagt ist und dessen Bewegung zu einer Verarbeitungsvorrichtung mit nachgeschalteter Anzeigevorrichtung übermittelt wird, dadurch g e - k e n n z e i c h n e t, daß das Laufrad (12) als-Schnelläufer ausgebildet und alle seine Schaufeln (20) über die Einlaßöffnung (8) im Gehäuse (1) gleich--zeitig beaufschlagt werden.

2. Geschwindigkeitsmesser nach Anspruch 1, dadurch g e k e n n z e i c h n e t, daß das Laufrad (12) mit zur Anströmrichtung (a) geneigter, insbesondere senkrechter Achsenlage im Gehäuse (1) angeordnet ist und daß die Einlaßöffnung (8) auf der Einlaßseite des Laufrades (12) und eine Auslaßöffnung (10) des Gehäuses (1) axial versetzt zur Einlaßöffnung (8) auf der Auslaßseite des Laufrades angeordnet sind.

3. Geschwindigkeitsmesser nach Anspruch 2, dadurch g e k e n n z e i c h n e t, daß das Laufrad (12) als Axialrad ausgebildet ist und die in Umfangsrichtung aufeinander folgenden Schaufeln (20) den gesamten Strömungsquerschnitt abdecken, wobei die Schaufeln (20) in Umfangsrichtung einander nicht oder nur unwesentlich überlappen.

4. Geschwindigkeitsmesser nach Anspruch 3, dadurch g e k e n n z e i c h n e t, daß die Schaufeln (20) einfach gekrümmt sind.

5. Geschwindigkeitsmesser nach Anspruch 3 oder 4, dadurch g e k e n n z e i c h n e t, daß der Anstellwinkel ( α ) der Schaufeln (20) des Laufrades (12) je nach den Anwendungsbedingungen variabel ist.

6. Geschwindigkeitsmesser nach einem der Ansprüche 1 bis 5, dadurch g e k e n n z e i c h n e t, daß Einlaßöffnung ( 8) und Auslaßöffnung (10) symmetrisch zur Längsmittelachse und Hauptanströmrichtung (A) des Gehäuses (1) angeordnet sind.

7. Geschwindigkeitsmesser nach einem der Ansprüche 1 bis 6, dadurch g e k e n n z e i c h n e t, daß die Einströmöffnung (8) des Gehäuses (1) eine düsenartige Verengung (8') aufweist, die in einen Ringraum (13) auf der Einlaßseite des Laufrades (12) mündet, und daß auf der Auslaßseite des Laufrades ebenfalls ein Ringraum (14) vorgesehen ist, von dem die Auslaßöffnung (10) um 180° am Umfang des Laufrades zur Einlaßöffnung (8) versetzt ausgeht.

8. Geschwindigkeitsmesser nach einem der Ansprüche 1 bis 7, dadurch g e k e n n z e i c h n e t, daß der Kern (21) des Laufrades (12) von einem Magnet (22) durchsetzt ist, der mit einem benachbart dem Laufrad (12) im Gehäuse untergebrachten Magnetfeldsensor (23,24) zusammenwirkt, welcher durch die Laufraddrehung erzeugte magnetische Impulse in Spannungsimpulse umformt und an eine elektrische Schaltung (45) zum Betätigen der Anzeigevorrichtung (50) weiterleitet.

- 11 -

9. Geschwindigkeitsmesser nach Anspruch 8, dadurch
g e k e n n z e i c h n e t, daß die vom Magnetfeldsensor (23,24) erzeugten Spannungsimpulse drahtlos
zur Anzeigevorrichtung (50) übertragen werden.

10. Geschwindigkeitsmesser nach einem der Ansprüche
1 bis 9, dadurch g e k e n n z e i c h n e t, daß
die Verarbeitungsvorrichtung einen Mikrocomputer
aufweist, in welchem von der Bewegung des Laufrades
(12) abgeleitete Größen wie die Momentangeschwindigkeit
die Durchschnitts- und die Maximalgeschwindigkeiten,
der zurückgelegte Weg und die Beschleunigung innerhalb
einer vorgegebenen Zeitspanne ermittelt und der
Anzeigevorrichtung(50) zugeführt werden.

0119477

1/1

FIG. 1

FIG. 2

FIG. 3

FIG. 4

FIG. 5

FIG. 6

0119477

Europäisches
Patentamt

# EUROPÄISCHER RECHERCHENBERICHT

Nummer der Anmeldung

EP 84 10 1615

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 981 (G.K. BULLER ELPHINSTONE)(A.D.1909) <br> * Seite 4, Zeilen 32-37; Figur 1 * | 1,2,6 | G 01 P 5/07 |
| X | US-A-3 610 039 (ALTHOUSE et al.) <br> * Spalte 3, Zeilen 1-28; Figuren 1,2 * | 1,3,8 | |
| A | GB-A- 752 496 (SEMISA S.A.) <br> * Seite 4, Zeilen 115-119; Figur 6 * | 1,7,8 | |
| A | EP-A-0 062 801 (DODUCO KG) <br> * Seite 8, Zeilen 22-29; Figuren 1,2 * | 1,8 | |
| | | | RECHERCHIERTE SACHGEBIETE (Int. Cl. ³) |
| A | FR-A-1 136 186 (LE CHIMISTE) <br> * Seite 2, Spalte 1, Zeilen 16-38; Figuren 2,3 * | 1,9 | G 01 P |
| A | US-A-3 433 065 (H.W. MERGLER) <br> * Spalte 1, Zeilen 21-26; Figur 1 * | 1,10 | |
| A | US-A-3 678 474 (R.M. BROWN) <br> * Spalte 1, Zeilen 38-55; Figur 1 * | 1,10 | |

Der vorliegende Recherchenbericht wurde für alle Patentansprüche erstellt.

| Recherchenort | Abschlußdatum der Recherche | Prüfer |
|---|---|---|
| DEN HAAG | 30-05-1984 | HANSEN P. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82